# EUROPÄISCHE PATENTSCHRIFT

(11) **EP 0 484 571 B1**
(45) Veröffentlichungstag und Bekanntmachung des Hinweises auf die Patenterteilung: **20.09.1995**
(21) Anmeldenummer: 90121212.6
(22) Anmeldetag: 06.11.1990
(51) Int. Cl.: H04N 9/31

(54) **Projektionsfernsehsystem**
Projection TV system
Système TV de projection

(43) Veröffentlichungstag der Anmeldung: 13.05.1992
(73) Patentinhaber: Deutsche ITT Industries GmbH, 79108 Freiburg (DE)
(72) Erfinder: Micic, Ljubomir Dipl.-Ing. (FH), W-7800 Freiburg (DE); Heberle, Klaus Dipl.-Ing., W-7801 Reute (DE)

(56) Entgegenhaltungen:
- US-A- 4 786 966
- US-A- 4 916 532
- PATENT ABSTRACTS OF JAPAN, Band 12, Nr. 204 (E-620)[3051], 11. Juni 1988; & JP-A-63 002 476
- PATENT ABSTRACTS OF JAPAN, Band 13, Nr. 570 (P-977)[3918], 18. Dezember 1989;& JP-A-1237592

## Beschreibung

Die Erfindung betrifft ein Projektionsfernsehsystem mit einer Projektionseinrichtung.

Ein solches Projektionsfernsehsystem ist aus "Patent Abstracts of Japan", JP-A- 63 002 476, Band 12, Nr. 204, 1988 bekannt. Aus der US-A- 4 786 966 ist es bekannt, Videosignale mittels Licht, insbesondere Ultraviolett- und Infrarotlicht, zu übertragen.

Der Erfindung liegt die Aufgabe zugrunde, ein Projektionsfernsehsystem zu schaffen, dem das Fernsehsignal ohne Kabel und mit relativ geringer Sendeleistung zugeführt werden kann.

Diese Aufgabe wird durch ein Projektionsfernsehsystem mit den Merkmalen des Patentanspruchs 1 gelöst.

Die Projektionseinrichtung wird über eine Infrarotübertragungsstrecke mit einem Fernsehsignal gespeist. Das übertragene Fernsehsignal kann dabei analog oder digital als FBAS-Signal oder analog oder digital als R-, G- und B-Signal mit den zugehörigen Synchronzeichen übertragen werden. Der wesentliche Vorteil der Erfindung besteht darin, daß die Projektionsoptik des Fernsehprojektors für die Infrarotübertragungsstrecke mitverwendet wird, so daß die Sendeleistung des oder der Infrarotgeber relativ klein bleiben kann.

Bevorzugte Ausführungsbeispiele der Erfindung sind in den Unteransprüchen offenbart.

Die Erfindung und ihre Vorteile werden nun anhand der Figuren der Zeichnung näher erläutert:
Fig. 1 zeigt schematisch das Projektionsfernsehsystem,
Fig. 2 zeigt eine vorteilhafte räumliche Anordnung des projezierten Bildes und der Infrarotsendeeinrichtung und
Fig. 3 zeigt schematisch eine automatische Korrektur der Bildgeometrie.

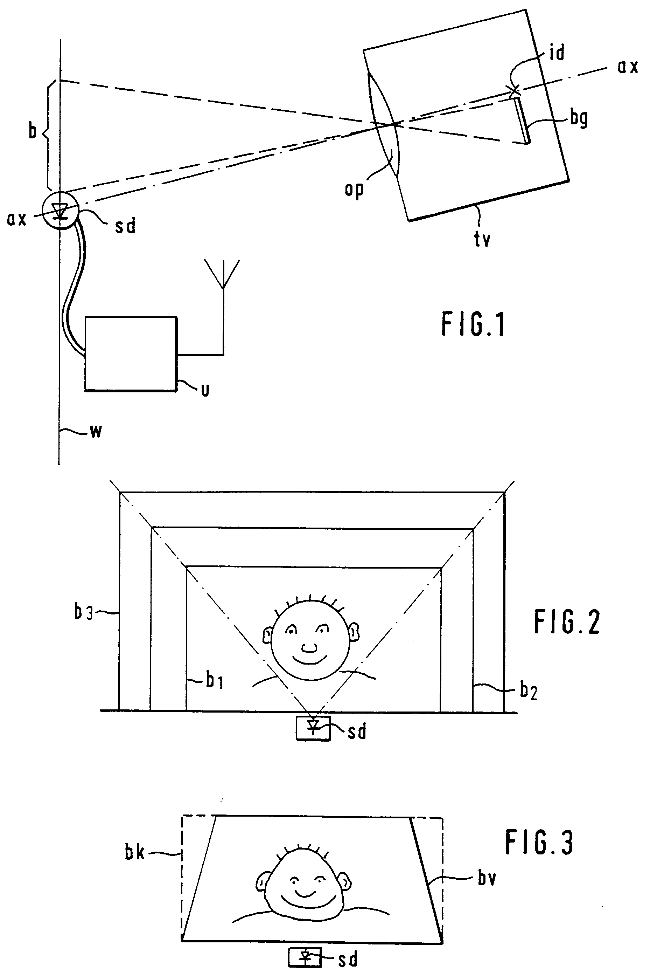

Fig. 1 zeigt schematisch das Fernsehprojektionssystem mit dem Projektionsgerät tv, das beispielsweise an einer Deckenaufhängung befestigt ist. Die Stromzuführung ist dabei in der Regel unkritisch, weil Netzleitungen überall verlegt sind. Die Zuführung des Fernsehsignals ist jedoch meist nicht vorgesehen. Zu diesem Zweck wird das empfangene Fernsehsignal mittels eines Umsetzers u und einer Infrarotsendeeinrichtung sd in ein Infrarotsignal umgewandelt, das von einem Infrarotdetektor id im Projektionsgerät tv empfangen werden kann. Der Infrarotdetektor id im Projektionsgerät tv, der sich unmittelbar oberhalb des Bildgebers bg befindet, ist an einen Empfänger angeschlossen, der elektronische Filter und Verstärker enthält, um aus den Ausgangssignalen des Infrarotdetektors id die Fernsehsignale für das Projektionsgerät tv zu erzeugen. Die Ausführung dieses Empfängers ist nicht Gegenstand der Erfindung und er ist in Fig. 1 daher auch nicht dargestellt.

Auf der Projektionswand w ist schematisch der Bereich b angedeutet, in dem das projezierte Fernsehbild wiedergegeben wird und unmittelbar darunter befindet sich die Infrarotsendeeinrichtung sd. Befindet sich dabei die Senderdiode sd im Bereich der optischen Achse ax, dann befindet sich auch im Projektionsgerät tv der Infrarotdetektor id im Bereich der optischen Achse. Diese Anordnung ist besonders vorteilhaft, weil unabhängig von der Bildentfernung der Ort des Infrarotdetektors id stets auf der optischen Achse ax bleibt. Dieser Ort verändert sich auch nicht, wenn die Optik op eine Zoom-Optik ist, die eine unterschiedliche Bildgröße b1, b2, b3 ermöglicht, vgl. Fig. 2.

Ein weiterer Vorteil dieser Anordnung ergibt sich, wenn der Infrarotdetektor id als Vielfachsplitelement ausgebildet ist. Dann bildet die abgebildete Senderdiode sd auf dem Splitdetektor ein verzerrtes Abbild, das der Verzerrung des wiedergegebenen Fernsehbildes im Bereich b entspricht. In Fig. 3 ist dieses verzerrte Abbild bv schematisch dargestellt. Durch Auswertung der Abbildung auf dem Vielfachsplitdetektor kann die erforderliche Korrektur für das projezierte Fernsehbild bestimmt werden und eine entsprechende elektronische oder optische Korrektur auslösen, vgl. die gestrichelte Linie bk in Fig. 3.

Wird das Fernsehsignal räumlich getrennt als R-, G- und B-Signal Signal über jeweils eine Sendediode ausgestrählt, dann sind im Projektfansgerät tv drei Infrarotdetektoren id erforderlich, die ebenfalls räumlich voneinander getrennt sind. Liegen sie in der Ebene der optischen Achse ax, dann ist bei unterschiedlichen Projektionsentfernungen oder beim Zoom-Betrieb lediglich eine seitliche Verschiebung der beiden äußeren Infrarotdetektoren erforderlich.

## Patentansprüche

1. Projektionsfernsehsystem mit einer optischen Projektionseinrichtung für die Fernsehwiedergabe, dadurch gekennzeichnet, daß deren Optik (op) gleichzeitig der optischen Bündelung der von einer Infrarotsendeeinrichtung (sd) ausgehenden Fernsehsignale auf einen Infrarotdetektor (id) im Projektionsgerät (tv) dient.

2. Projektionsfernsehsystem nach Anspruch 1, dadurch gekennzeichnet, daß die Infrarotsendeeinrichtung (sd) und der Infrarotdetektor (id) im Bereich der optischen Achse (ax) der Optik (op) liegen.

3. Projektionsfernsehsystem nach Anspruch 1, dadurch gekennzeichnet, daß die Infrarotsendeeinrichtung (sd) ein digitalisiertes FBAS-Signal überträgt.

4. Projektionsfernsehsystem nach Anspruch 1, dadurch gekennzeichnet, daß die Infrarotsendeeinrichtung (sd) drei räumlich getrennte Sendedioden enthält, die getrennt ein R-, G- und B-Signal zusammen mit Synchronzeichen übertragen und daß im Projektionsgerät (tv) drei entsprechend räumlich getrennte Infrarotdetektoren vorhanden sind.

5. Projektionsfernsehsystem nach Anspruch 1, dadurch gekennzeichnet, daß der Infrarotdetektor (id) ein Vielfachsplitelement ist, und daß die einzelnen Ausgangssignale des Vielfachsplitelementes elektronisch weiterverarbeitet werden.

6. Projektionsfernsehsystem nach Anspruch 5, dadurch gekennzeichnet, daß aus den Ausgangssignalen des vielfachsplitelementes ein Signal abgeleitet wird, das der automatischen Entzerrung des projezierten Bildes (bv) dient, wobei die automatische Entzerrung durch elektronische oder optische Mittel erfolgt.

## Claims

1. A projection television system comprising an optical projection unit for television reproduction,
characterized in that its optics (op) also serve to optically concentrate the television signals from an infrared transmitter (sd) on an infrared detector (id) in the projection unit (tv).

2. A projection television system as claimed in claim 1, characterized in that the infrared transmitter (sd) and the infrared detector (id) lie in the range of the optical axis (ax) of the optics (op).

3. A projection television system as claimed in claim 1, characterized in that the infrared transmitter (sd) transmits a digitized composite color signal.

4. A projection television system as claimed in claim 1, characterized in that the infrared transmitter (sd) contains three spatially separated transmitter diodes which transmit R, G, and B signals, respectively, together with synchronizing signals, and that the projection unit (tv) contains three correspondingly spatially separated infrared detectors.

5. A projection television system as claimed in claim 1, characterized in that the infrared detector (id) is a multiple split element, and that the individual output signals from the multiple split element are electronically processed.

6. A projection television system as claimed in claim 5, characterized in that from the output signals from the multiple split element, a signal is derived which serves to automatically correct the distortion of the projected image (bv), said automatic correction being performed by electronic or optical means.

## Revendications

1. Système de télévision à projection comportant un dispositif de projection optique pour la reproduction télévisée, caractérisé en ce que le système optique (op) de ce dispositif de projection sert simultanément à réaliser la focalisation optique des signaux de télévision, qui sont émis par un dispositif émetteur à infrarouge (sd), sur un détecteur infrarouge (id) situé dans l'appareil de projection (tv).

2. Système de télévision à projection selon la revendication 1, caractérisé par le fait que le dispositif émetteur à infrarouge (sd) et le détecteur à infrarouge (id) sont situés au voisinage de l'axe optique (ax) du dispositif optique (op).

3. Système de télévision à projection selon la revendication 1, caractérisé en ce que le dispositif émetteur à infrarouge (sd) transmet un signal FBAS (signal de télévision complexe en couleurs) numérisé.

4. Système de télévision à projection selon la revendication 1, caractérisé par le fait que le dispositif émetteur à infrarouge (sd) contient trois diodes émissives séparées spatialement, qui transmettent séparément un signal R, V et B conjointement avec des signaux de synchronisation et que trois détecteurs à infrarouge, qui sont séparés spatialement de façon correspondante, sont présents dans l'appareil de projection (tv).

5. Système de télévision à projection selon la revendication 1, caractérisé en ce que le détecteur à infrarouge (id) est un élément à fentes multiples et que les différents signaux de sortie de l'élément à fentes multiples sont traités ensuite électroniquement.

6. Système de télévision à projection selon la revendication 5, caractérisé en ce qu'à partir des signaux de sortie de l'élément à fentes multiples est dérivé un signal, qui sert à réaliser la correction automatique de distorsion de l'image projetée (bv), la correction automatique étant réalisée à l'aide de moyens électroniques ou optiques.
